# EUROPEAN PATENT APPLICATION

(11) **EP 4 432 622 A1**
(43) Date of publication of application: **18.09.2024**
(21) Application number: 22891620.1
(22) Date of filing: 08.09.2022
(51) Int. Cl.: H04L 45/00, H04L 45/02, H04W 40/02, H04W 40/04

(54) **METHOD AND APPARATUS FOR CONSTRUCTING DETERMINISTIC ROUTING, AND STORAGE MEDIUM**

(30) Priority: 09.11.2021 CN 202111321831
(71) Applicant: ZTE Corporation, Shenzhen, Guangdong 518057 (CN)
(72) Inventor: XIONG, Quan, Shenzhen, Guangdong 518057 (CN); LIU, Aihua, Shenzhen, Guangdong 518057 (CN); PENG, Shaofu, Shenzhen, Guangdong 518057 (CN)
(74) Representative: Chimini, Francesco
(86) International application number: PCT/CN2022/117869
(87) International publication number: WO 2023/082815

(57) **Abstract**

Embodiments of the present invention provide a method and an apparatus for constructing a deterministic route, and a storage medium. The method comprises: a virtual topology with a deterministic capability determined, wherein the virtual topology is formed based on a resource set, and the resource set comprises one or more resources with the same deterministic capability in a physical topology of a network; a deterministic route is constructed on the virtual topology with the deterministic capability. By means of the present invention, the problem in the related art that a deterministic route satisfying a deterministic transmission requirement can be constructed only when faced with a deterministic transmission requirement of a service and complex resource evaluation and calculation are usually required is solved. The solution can reasonably, quickly and accurately construct a deterministic route satisfying a service requirement, and supports a deterministic network to provide a deterministic service.

## Description

### Cross-Reference to Related Application

This invention is based on Chinese Patent Application CN 20211321831.5 filed on 09 November 2021 and entitled "Method and apparatus for constructing deterministic route, and storage medium", and claiming priority of this patent application, the invention of which is incorporated herein by reference in its entirety.

### Technical Field

Embodiments of the present invention relate to the field of communications, and in particular, to a method and an apparatus for constructing a deterministic route, and a storage medium.

### Background

To meet service requirements of deterministic services and the like, in order to implement a deterministic technology on a Layer 3 (L3) layer, the Internet Engineering Task Force (IETF) standard organization proposes a Deterministic Networking Technology (DetNet), in which a Request For Comments (RFC) 8655 defines a DetNet related technical architecture, and provides a deterministic service for a layer 2 bridge and a layer 3 routing network, Quality of Service (QoS) requirements include a definite time delay upper limit, a low packet loss rate, and reduced jitter and high reliability.

The deterministic network employs resource allocation, explicit routes, and service protection to provide deterministic QoS. Resource allocation is to satisfy a deterministic resource requirement, and relates to resource allocation and reservation, etc. Explicit routes is to satisfy a deterministic path requirement, which means that a network path of a deterministic service flow needs to be selected in advance, so as to ensure the stability of routing at least during service residence. Routing of a deterministic network uses a deterministic path technology, and a routing path does not change with real-time change of a network topology. This technology ensures that a transmission path of a deterministic flow is relatively fixed, and provides a basic guarantee for a resource allocation technology. In addition, the fixing of a path also provides a possibility for accurate calculation of a delay, and is an important technical support for guaranteeing a limited delay and jitter.

In current practices, when faced with a service deterministic transmission requirement, complex resource evaluation and calculation are usually required to construct a deterministic route meeting the deterministic transmission requirement, and how to quickly and accurately construct a deterministic route meeting the service requirement is a problem to be solved urgently.

### Summary

Embodiments of the present invention provide a method and apparatus for constructing a deterministic route, and a storage medium, so as to at least solve the problem in the related art that a deterministic route meeting a deterministic transmission requirement can be constructed only when faced with the deterministic transmission requirement of a service, and complex resource evaluation and calculation are often required.

Provided is a method for constructing a deterministic route. The method includes: a virtual topology with a deterministic capability is determined, wherein the virtual topology is formed based on a resource set, and the resource set comprises one or more resources with the same deterministic capability in a physical topology of a network; a deterministic route is constructed on the virtual topology with the deterministic capability.

According to an embodiment of the present invention, an apparatus for constructing a deterministic route is further provided, including: a determining module configured to determine a virtual topology with a deterministic capability, wherein the virtual topology is formed based on a resource set, and the resource set comprises one or more resources with the same deterministic capability in a physical topology of a network; a routing constructing module, configured to construct a deterministic route on the virtual topology with the deterministic capability.

Embodiments of the present invention further provide a computer readable storage medium, wherein a computer program is stored in the computer readable storage medium , and the computer program is configured to cause, when executed by a processor, the processor to perform the steps in any one of the described method embodiments during running.

Embodiments of the present invention also provide an electronic device, comprising a memory and a processor, and a computer program that is stored in the memory and executable on the processor, wherein the processor is configured to execute the computer program to perform the steps in any one of the method embodiments.

### Brief Description of the Drawings

Figure 1 is a hardware structure block diagram of a node or controller for implementing a method for constructing a deterministic route according to an embodiment of the present invention;
Figure 2 is a flowchart of a method for constructing a deterministic route according to an embodiment of the present invention;
Figure 3 is a structural block diagram of an apparatus for constructing a deterministic route according to an embodiment of the present invention;
Figure 4 is a detailed flowchart of a method for constructing a deterministic route according to an embodiment of the present invention;
Figure 5 is a network architecture diagram based on deterministic routing according to an embodiment of the present invention.

### Detailed Description of the Embodiments

A Network Topology structure refers to a physical layout of interconnecting various devices by using a transmission medium, and refers to a specific physical, i.e., real, or logical, i.e., virtual arrangement manner among members forming a network.

Routing refers to a process of determining a network range of an end-to-end path from a source to a destination of a packet in a network topology. A route works at the third layer of the OSI reference model, i.e. a network layer, and a router is a network-layer packet forwarding device. Routing refers to a process in which a router receives a data packet from one interface, performs redirection according to a destination address of the data packet, and forwards the data packet to another interface.

Routing metrics are metrics used by a routing algorithm to determine the optimal path to a destination. In order to facilitate routing, a routing algorithm initializes and maintains a routing table including path information, where the path information varies according to the routing algorithm and metric used. The routes are classified into static routes and dynamic routes, etc. The static routes is a fixed routing manually configured by an administrator on a router. The dynamic routes is a process in which routers in a network communicate with each other to transmit routing information according to a real-time network topology change, and a routing table is updated by calculating received routing information through a routing selection protocol. Common dynamic routing protocols, such as link state routing protocols, include Open Shortest Path First (OSPF), Intermediate System to Intermediate System (ISIS), and the like. A user creates a route in a network topology according to requirements and selects an optimal route to complete packet forwarding. The routing generation includes centralized controller configuration and distributed protocol generation.

In order to satisfy service requirements of deterministic services, etc. , in order to implement a deterministic technology at an L3 layer, an IETF standard organization proposes a Deterministic Network Technology (DetNet), in which an RFC8655 defines the DetNet related technical framework to provide a deterministic service for a two-layer bridge and a three-layer routing network, and QoS requirements comprise a deterministic time delay upper limit, a low packet loss rate, and reduced jitter and high reliability, etc.

The deterministic network employs resource allocation, explicit routes, and services protection to provide deterministic QoS. The resource allocation is to satisfy a deterministic resource requirement, and relates to resource allocation, reservation, etc. , comprising link bandwidth, delay queue resource, etc. The explicit routes is to satisfy a deterministic path requirement, which means that a network path of a deterministic service flow needs to be selected in advance, so as to ensure the stability of routing at least during service residence. Routing of a deterministic network employs a deterministic path technology, and a routing path does not change with real-time change of a network topology. This technology ensures that a transmission path of a deterministic flow is relatively fixed, and provides a basic guarantee for a resource allocation technology. In addition, the fixing of a path also provides a possibility for accurate calculation of a delay, and is an important technical support for guaranteeing a limited delay and jitter.

In current practices, when faced with a service deterministic transmission requirement, complex resource evaluation and calculation are usually required to construct a deterministic route meeting the deterministic transmission requirement, and how to quickly and accurately construct a deterministic route meeting the service requirement is a problem to be solved urgently.

Further, in a current industrial user multi-scenario, a bearer requirement of a deterministic service is multidimensional, and deterministic quality indicators of different dimensions have different levels, in order to meet the diversified deterministic transmission requirements of various services, it is necessary to provide deterministic routing of various capabilities in a network, for example, a pre-route carrying a Service Level Agreement (SLA) capability needs to be further provided, generating an endogenous deterministic route with a deterministic capability, the route having both path forwarding and QoS assurance functions, etc. however, there is no relevant technology in the current network to flexibly construct a deterministic route meeting the requirements of service bearing.

To this end, embodiments of the present invention provide a method and apparatus for constructing a deterministic route, and a storage medium, so as to at least solve the problem in the related art that a deterministic route satisfying a deterministic transmission requirement can be constructed only when faced with a deterministic transmission requirement of a service and complex resource evaluation and calculation are usually required. In addition, the solutions for constructing a deterministic route provided in some exemplary embodiments can further provide a deterministic route that meets a multi-dimensional service bearer requirement.

Embodiments of the present invention will be described below in detail with reference to the accompanying drawings and in conjunction with embodiments.

It should be noted that, terms such as "first" and "second" in the description, claims, and accompanying drawings of the present invention are used to distinguish similar objects, but are not necessarily used to describe a specific sequence or order.

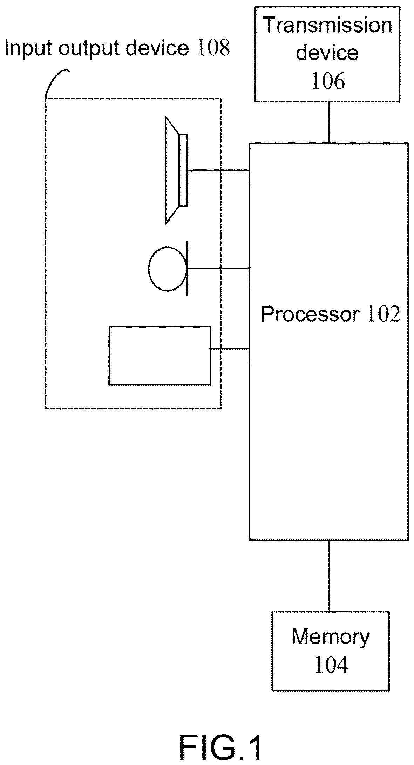

The method embodiments provided in the embodiments of the present invention may be executed in a node or a controller in a network. Figure 1 is a hardware structure block diagram of a node or controller for implementing a method for constructing a deterministic route according to an embodiment of the present invention. As shown in figure 1, a node or controller may include one or more (only one is shown in figure 1) processors 102 (the processors 102 may include, but are not limited to,a processing apparatus such as a Micro Controller Unit (MCU), a Field Programmable Gate Array (FPGA) or the like), and a memory 104 for storing data. The node or the controller can further include a transmission device 106 and an input/output device 108 for a communication function. A person of ordinary skill in the art may understand that the structure shown in figure 1 is merely exemplary, which does not limit the structure of the foregoing nodes or controllers. For example, a node or controller may also include more or fewer components than shown in figure 1, or have a different configuration than shown in figure 1.

The memory 104 may be configured to store a computer program, for example, a software program and a module of application software, such as a computer program corresponding to the method for constructing a deterministic route in the embodiments of the present invention. The processor 102 runs the computer program stored in the memory 104, so as to execute various function applications and data processing, that is, to implement the foregoing method. Memory 104 may include high-speed random access memory, and may also include non-volatile memory, such as one or more magnetic storage apparatus, flash memory, or other non-volatile solid-state memory. In some examples, memory 104 may further include memory remotely located with respect to processor 102, which may be connected to nodes over a network. Examples of such networks include, but are not limited to, the internet, intranets, local area networks, mobile communication networks, and combinations thereof.

The transmitting device 106 is configured to receive or transmit data via a network.

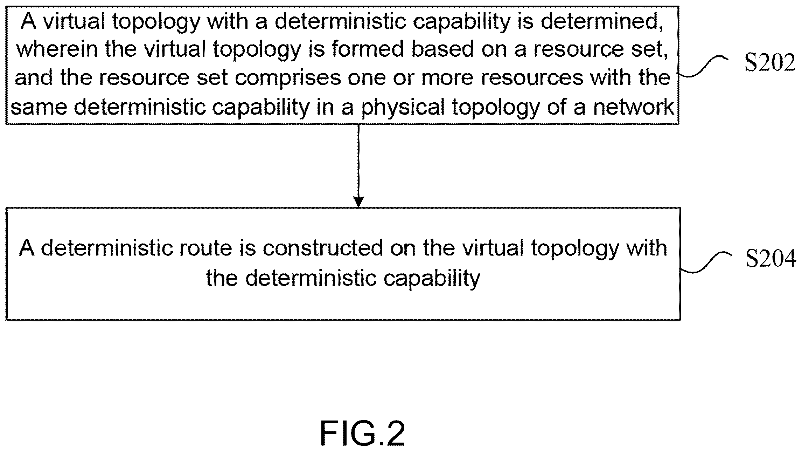

The present embodiment provides a method for constructing a deterministic route running on a node or a controller. Figure 2 is a flowchart of a method for constructing a deterministic route according to an embodiment of the present invention. As shown in figure 2, the method comprises the following steps:
Step S202: a virtual topology with a deterministic capability is determined, wherein the virtual topology is formed based on a resource set, and the resource set comprises one or more resources with the same deterministic capability in a physical topology of a network.

The resource may comprise at least one of the following: a physical forwarding node, a virtual forwarding node, a link, a computing power, a storage node, a bandwidth and a queue, wherein the physical forwarding node and the virtual forwarding node comprise at least one of the following: an intra-node port, a queue, scheduling, service processing and a cross-switching matrix.

The physical topology of the network has a large number of resources, and different resources may have the same or different deterministic capabilities. Therefore, resources of a physical topology in a network may form a plurality of resource sets, with one resource set including resources with the same deterministic capabilities. The resources with the same deterministic capabilities may constitute one or more resource sets, based on which one or more virtual topologies may be constituted. Resources included in a plurality of resource sets corresponding to the same deterministic capability may be the same or partially the same, and at this time, different virtual topologies formed by a plurality of resource sets based on the same deterministic capability may share resources or partially share resources. The virtual topology may also have exclusive resources, or may also have partial resource sharing and partial resource exclusive.

The virtual topologies may be aggregated. For example, a plurality of resource sets corresponding to the same deterministic capabilities may be used to constitute a plurality of virtual topologies, which may be aggregated to constitute a larger virtual topology. For another example, if the bearer demand of the deterministic service corresponds to a deterministic capability within a certain range, for example, [a, b], or [a, max], where a and b represent numerical values or ranks of a particular deterministic capability, and max represents a maximum numerical value or maximum rank supported by the system, In this case, a plurality of virtual topologies corresponding to the deterministic capability within the range may be aggregated, so as to obtain a corresponding virtual topology whose deterministic capability can meet a bearing requirement of a deterministic service.

In at least one example embodiment, step S202 may determine a virtual topology with deterministic capabilities by the following manner:
a deterministic capability of a resource in the physical topology is acquired;
the resources in the physical topology are classified according to the deterministic capabilities of the resources;
resources with the same classification are divided into the same resource sets, and the virtual topology is constituted based on the resource sets.

By classifying the resources according to the deterministic capabilities of the resources, a series of resources belonging to the same classification can be obtained, and the resources are classified into the same resource set.

For some resources, different levels may be further classified under the same classification. For example, the delay class resources may be classified into ultra-low delay resources, low delay resources, and low jitter resources, so as to embody different delay precision (for example, 10 ms, 20 ms, and so on) or delay jitter precision (for example, 10 us, 20 us, and so on). Generally, resources with ultra-low latency include L1 layer cutthrough channels and the like, and resources with low latency include exclusive bandwidth and the like; the ultra-low delay jitter resources include L1 Flexible Ethernet (FlexE) pipes, etc. , and the low delay jitter resources include resources scheduled based on a periodic queue and based on a time node (Deadline), etc. Therefore, in at least one exemplary embodiment, after the resources in the physical topology are classified according to the deterministic capabilities of the resources, the method can further include: the resources with the same classification are graded according to the value of the deterministic capabilities of the resources; the resources with the same classification are divided into the same resource set includes the resources with the same classification and with the same level are divided into the same resource set.

By means of the method, it can be ensured that resources of the same classification and the same level are divided into the same resource set, thereby ensuring that a virtual topology constituted based on the resource set can provide a corresponding deterministic capability.

In a current industrial user multi-scenario, a bearer requirement of a deterministic service is multidimensional, and deterministic quality indicators of different dimensions have different levels, in order to meet the diversified deterministic transmission requirements of various services, it is necessary to provide deterministic routing of various capabilities in a network, hence, in order to adapt to the multi-dimensional bearer requirement, in at least one exemplary embodiment, the resources are classified according to the deterministic capabilities of the resources may include, based on a preset dimension, and the resources are classified according to the deterministic capabilities of the resources, wherein the preset dimension comprises at least one of the following: a deterministic resource usage manner, a deterministic network function, and the quality and performance of a deterministic network service.

In at least one exemplary embodiment, the deterministic resource usage manner includes at least one of the following: exclusive use, shared use, and virtual exclusive use.

In at least one exemplary embodiment, the deterministic network functions include a deterministic function that can be provided by a network or a function that can be guaranteed by the network. The deterministic network function may include at least one of the following: forwarding, encrypting, encapsulating, routing, and quality of service.

In at least one example embodiment, the quality and performance of the deterministic network service includes at least one of the following: a deterministic service level agreement, a deterministic service quality capability. The deterministic service quality capability may include at least one of the capabilities such as delay, jitter and packet loss, and various types of resources (for example, bandwidth type resources, delay type resources, instance type resources, and storage type resources) are mainly resources capable of providing or affecting the deterministic capability.

Step S204: a deterministic route is constructed on the virtual topology with the deterministic capability.

Since a deterministic route is constructed on a virtual topology with a deterministic capability, attributes of a resource can ensure the deterministic nature of the route, which belongs to an endogenous deterministic route.

According to the solutions of the embodiments of the present invention, a virtual topology with a deterministic capability is determined first, where the virtual topology is formed based on a resource set, and the resource set includes one or more resources with the same deterministic capability in a physical topology of a network; then a deterministic route is constructed on the virtual topology with the deterministic capability, only a route needs to be constructed on the virtual topology to ensure that all constructed routes have corresponding deterministic capabilities, thus, the problem in the related art that complex resource evaluation and calculation are often required when faced with a service deterministic transmission demand is solved, the solution can reasonably, quickly and accurately construct a deterministic route satisfying a service requirement, support deterministic networks provide deterministic services.

In practical applications, the route generation mode may be distributed or centralized, which will be described respectively hereinafter.

With regard to a centralized route generation scheme, a controller receives resource information reported by a node, determines a virtual topology based on the reported information, constructs a deterministic route and configures the deterministic route to the node. Therefore, in at least one embodiment, step S202 may include: resource information reported by a node is received by a controller, wherein the resource information carries a deterministic capability of the resource; step S204 includes: the controller constructs a deterministic route on the virtual topology having the performance capability, and configures the deterministic route to the node. The time node that the node reports the resource information may include a report when the node is established and a report when the resource is updated.

With regard to a distributed route generation scheme, a node floods resource information in a network, determines a virtual topology based on the received resource information, and constructs a deterministic route. Therefore, in at least one exemplary embodiment, step S202 may include: a node receives resource information flooded by other nodes, wherein the resource information carries a deterministic capability of the resource; step S204 may include: the controller constructs a deterministic route on the virtual topology with the deterministic capability. The time node where the node floods the resource information may include flooding when the node is established and flooding when the resource is updated.

In contrast to the related art in which only a metric attribute of a link (for example, the Interior Gateway metric (IGP metric) is considered, Traffic Engineering metric (TE metric), delay metric, etc.) is considered, the resources involved in the solutions of the embodiments of the present disclosure include various types of resources. In addition, their respective deterministic attributes all participate in the classification and then form a virtual topology, and the deterministic route thus formed is equivalent to considering both the time delay within a node and the link time delay.That is to say, a measurement influence in a node is taken into consideration, and a type of a measurement that enhances a deterministic capability is introduced, such a metric may be referred to as a deterministic delay metric, which includes both delay within a node and link delay.

Through the description of the foregoing embodiments, a person skilled in the art may clearly understand that the method according to the foregoing embodiments may be implemented by software in addition to a necessary universal hardware platform, and definitely may also be implemented by hardware. However, in many cases, the former is a preferred implementation. Based on such understanding, the technical solutions of the present invention substantially or the part contributing to the related art may be embodied in the form of a software product, the computer software product is stored in a storage medium (such as a Read-Only Memory (ROM) or a Random Access Memory (RAM), a RAM, a magnetic disk, or an optical disk for short) includes several instructions for instructing a terminal device (which may be a mobile phone, a computer, a server, a network device, or the like)performing methods of various embodiments of the present invention.

An apparatus for constructing a deterministic route is also provided in the present embodiment. The apparatus is used for implementing the described embodiments and example implementation, and what has been described will not be repeated. The term "module", as used hereinafter, is a combination of software and/or hardware capable of realizing a predetermined function. Although the apparatus described in the following embodiment is preferably implemented by software, implementation of hardware or a combination of software and hardware is also possible and conceived.

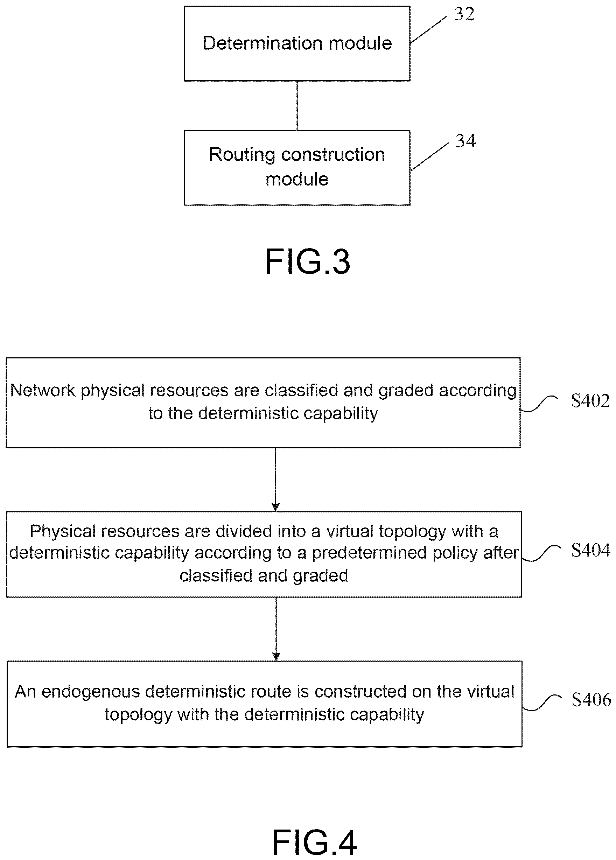

Figure 3 is a structural block diagram of an apparatus for constructing a deterministic route according to an embodiment of the present invention. As shown in figure 3, the apparatus for constructing a deterministic route comprises:
A determination module 32, configured to determine a virtual topology with a deterministic capability, wherein the virtual topology is formed based on a resource set, and the resource set comprises one or more resources with the same deterministic capability in a physical topology of a network;

A routing construction module 34, configured to construct a deterministic route on the virtual topology with the deterministic capability.

In at least one exemplary embodiment, the determining component 32 is configured to acquire a deterministic capability of a resource in the physical topology; classify the resources in the physical topology according to the deterministic capabilities of the resources; divide resources with the same classification into the same resource set, and constitute the virtual topology based on the resource set.

In at least one exemplary embodiment, the determining component 32 is further configured to grade the resources with the same classification according to the value of the deterministic capability of the resources; divide resources with the same classification and with the same level to the same resource set.

A current apparatus for constructing a deterministic route is configured to implement the method for constructing a deterministic route described in the foregoing embodiment, and details are not repeatedly described herein for the content described in the foregoing embodiment.

It should be noted that each module may be implemented by software or hardware. The latter may be implemented in the following manner, but is not limited thereto. All the modules are located in a same processor; alternatively, the modules are located in different processors in an arbitrary combination.

Embodiments of the present invention also provide a computer readable storage medium, wherein a computer program is stored in the computer readable storage medium , and the computer program is configured to cause, when executed by a processor, the processor to perform the steps in any one of the described method embodiments during running.

In an exemplary embodiment, the computer readable storage medium may include, but is not limited to, any medium that can store a computer program, such as a USB flash disk, a ROM, a RAM, a removable hard disk, a magnetic disk, or an optical disk.

Embodiments of the present invention further provide an electronic apparatus, comprising a memory and a processor, and a computer program that is stored in the memory and executable on the processor, wherein the processor is configured to execute the computer program to perform the steps in any one of the method embodiments.

In an exemplary embodiment, the electronic apparatus can further comprise a transmission device and an input/output device, wherein the transmission device is connected to the processor, and the input/output device is connected to the processor.

For specific examples in this embodiment, reference may be made to the examples described in the foregoing embodiments and exemplary embodiments, and details are not repeatedly described in this embodiment.

In order to realize the diversified deterministic transmission requirements of various services, a deterministic route with various capabilities is constructed in a network. An embodiment of the present invention provides a method for constructing a deterministic route. The route provides a pre-route carrying an SLA capability, is an endogenous deterministic route with a deterministic capability, has path forwarding and QoS assurance functions, and supports a deterministic network to provide a deterministic service. The implementation process of the method for constructing a deterministic route is described in detail in the following.

Figure 4 is a detailed flowchart of a method for constructing a deterministic route according to an embodiment of the present invention. As shown in figure 4, the method includes the following steps:
Step S402: network physical resources are classified and graded according to the deterministic capability.

The physical topology of a network is composed of various resources, including physical or virtual forwarding nodes (including an intra-node port, a queue, scheduling, service processing, a cross-switching matrix), links, computing, storage nodes, links, bandwidths, queues, etc.

First, in order to satisfy a plurality of deterministic service requirements, resources in a physical topology need to be classified, and different classification of resources have different deterministic capabilities. The deterministic capabilities are classified in several dimensions: deterministic resource usage, deterministic network functions, and deterministic network service quality and performance dimensions. The use of resources may be divided into exclusive, shared, virtual exclusive, or combinations. Deterministic network functions are deterministic functions or guaranteed functions, including forwarding, encryption, encapsulation, routing, and QoS, among others. Quality and performance of a deterministic network service, comprising a deterministic SLA, and a deterministic QoS capability, comprising a bandwidth-classification resource, a time delay-classification resource, a computing-classification resource, a storage-classification resource, or further extending a new classification in the future.

Further, grading can be performed on a specific classification of resources, for example, grading can be performed on a time delay classification resource, such as an ultra-low time delay resource, a low time delay resource and a low jitter resource, so as to reflect different time delay precision (such as 10ms, 20ms) or time delay jitter precision (such as 10us, 20us). Generally, resources with ultralow latency include L1 layer cutthrough channels and the like, and resources with low latency include exclusive bandwidth and the like; An ultra-low delay jitter resource comprises an L1 layer FlexE pipeline and the like, and a low delay jitter resource comprises a periodic queue scheduling-based resource, a Deadline scheduling-based resource and the like.

Step S404: physical resources are divided into a virtual topology with a deterministic capability according to a predetermined policy after classified and graded.

After the classifying and grading of the resources are performed according to the deterministic capability, the resources of a specific classification/level are divided into a resource pool or a resource group to form a virtual topology (or referred to as a logical topology) with the deterministic capability. Topologies are relatively complex attributes, such as multiple deterministic attribute sharing topologies, exclusive topologies or topology aggregations.

Step S406: an endogenous deterministic route is constructed on the virtual topology with the deterministic capability.

After a virtual topology with the deterministic capability is constructed, a route with the deterministic capability needs to be further provided, where the route has both path forwarding and QoS assurance functions, and the route generation mode may be a distributed mode or a centralized mode.

In a distributed routing approach, deterministic routes may be dynamically generated using Interior Gateway Protocol (IGP) (e.g., OSPF or IS-IS) (intra-domain routing) and Border Gateway Protocol (BGP) (inter-domain routing). By means of an IGP, a node in a virtual topology with a deterministic capability floods resource information with the deterministic capability to all nodes in a local domain, calculates an optimal deterministic route by means of a routing algorithm, such as an SPF algorithm, and generates a routing table in the node. When a resource with a deterministic capability of a certain node changes, information needs to be flooded to all other nodes in the domain. For certain deterministic resources, oscillation suppression based on a specific threshold may be combined to avoid flooding storms. The routing algorithm, when computing deterministic routes, may compute based on a particular classification of deterministic metric. In contrast, in the related art, only a metric attribute (such as IGP metric, TE metric, delay metric) of a link is considered, and in this embodiment, a metric influence in a node is supplementary considered, and therefore, a metric classification that enhances a deterministic capability is introduced, for example, a Deterministic Delay Metric, which includes both a delay in a node and a link delay.

In a centralized routing manner, a deterministic route can be configured in a centralized manner by using a controller, and the controller collects virtual topology information with a deterministic capability, where the virtual topology information includes a deterministic capability metric attribute. The controller calculates a deterministic path by using a path algorithm, and configures the deterministic path to the node side by using a southbound interface between the controller and the node side, for example, a Network Configuration Protocol (netconf) (yang), a Path Computation Element Protocol (PCEP), a BGP, and an OpenFlow protocol.

The process of creating a deterministic route in a distributed manner is described below by an example embodiment.

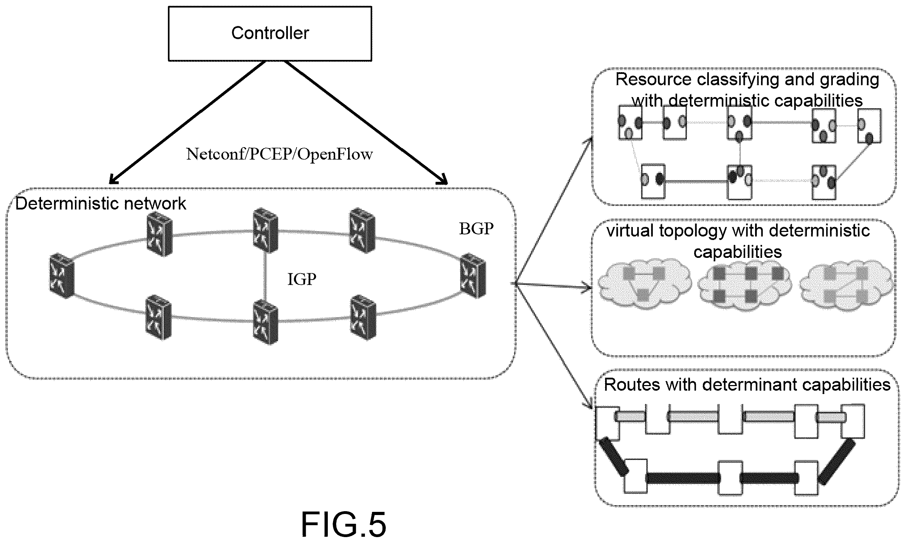

Figure 5 is a structural diagram of a network based on deterministic routing according to an embodiment of the present invention, as shown in figure 5, provided is a network structure diagram based on deterministic routing. The present exemplary embodiment provides a method for constructing a deterministic routing, the route provides a pre-route carrying an SLA capability, which is an endogenous deterministic route with a deterministic capability, a deterministic route is created in a distributed manner, and a deterministic route of a network is constructed in a distributed manner through an IGP protocol. The specific steps are as follows:
In a first step, resources with deterministic capabilities are divided through an IGP Flexible Algorithm (Flex-algo) policy in a slice, and the resources are classified and graded.

In a second step, a virtual topology with different deterministic capabilities is constructed by using an IGP protocol Flex-algorithm policy in a slice.

In a third step, a deterministic computation classification is selected through a deterministic path computation capability of an IGP protocol Flex-algorithm policy in a slice, a deterministic delay constraint condition is added, and a deterministic route is computed and generated.

The process of creating a deterministic route in a centralized manner is described below by an example embodiment.

Figure 5 is a structural diagram of a network based on deterministic routing according to an embodiment of the present invention, and figure 5 is a structural diagram of a network based on deterministic routing according to an embodiment of the present invention, the exemplary embodiment provides a method for constructing a deterministic route, the route provides a pre-route carrying an SLA capability, which is an endogenous deterministic route with a deterministic capability, a deterministic route is created in a centralized manner, a routing table is configured by a controller. The specific steps are as follows:
Step 1, a node reports a physical network topology resource to a controller via a southbound node protocol, such as Netconf(yang) and OpenFlow protocols;

In a second step, a controller manages topology resources, divides resources with deterministic capabilities, and classifies and ranks the resources.

The third step: the controller constructs a virtual topology with different deterministic capabilities by using resources with different deterministic capabilities.

A fourth step: a controller calculates a deterministic route by means of a path algorithm according to a metric of a deterministic capability, and configures same at a node side by means of a southbound interface between the controller and the node side, such as netconf(yang), PCEP and OpenFlow protocols.

Obviously, those skilled in the art should understand that each module or each step of the present invention can be implemented by a universal computing device, they may be centralized on a single computing device or distributed on a network composed of a plurality of computing devices, they can be implemented by program codes executable by a computing apparatus, and thus can be stored in a storage apparatus and executed by the computing apparatus. Furthermore, in some cases, the shown or described steps may be executed in an order different from that described here, or they are made into integrated circuit modules respectively, or a plurality of modules or steps therein are made into a single integrated circuit module for implementation. As such, the present invention is not limited to any particular hardware and software combination.

The foregoing descriptions are merely exemplary embodiments of the present invention, but are not intended to limit the present invention. For those skilled in the art, the present invention may have various modifications and variations. Any modifications, equivalent replacements, improvements and the like made within the principle of the present invention shall belong to the scope of protection of the present invention.

## Claims

1. A method for constructing a deterministic route, comprising:
determining a virtual topology with a deterministic capability, wherein the virtual topology is formed based on a resource set, and the resource set comprises one or more resources with the same deterministic capability in a physical topology of a network;
constructing a deterministic route on the virtual topology with the deterministic capability.

2. The method according to claim 1, wherein determining the virtual topology with the deterministic capability comprises:
acquiring a deterministic capability of a resource in the physical topology;
classifying the resources in the physical topology according to the deterministic capabilities of the resources;
dividing resources with the same classification into the same resource set, and constituting the virtual topology based on the resource set.

3. The method according to claim 2, wherein,
after classifying the resources in the physical topology according to the deterministic capabilities of the resources, the method further comprises:
grading the resources with the same classification according to the value of the deterministic capability of the resources;
dividing the resources with the same classification into the same resource set comprises:
dividing the resources with the same classification and with the same level to the same resource set.

4. The method according to claim 2 or 3, wherein the classifying the resources according to the deterministic capabilities of the resources comprises:
classifying the resources according to the deterministic capabilities of the resources based on a pre-set dimension, wherein the pre-set dimension comprises at least one of the following: a deterministic resource usage manner, a deterministic network function, and a quality and performance of the deterministic network service.

5. The method according to claim 4, wherein the deterministic resource usage manner comprises at least one of the following:
exclusive use, shared use, and virtual exclusive use.

6. The method according to claim 4, wherein the deterministic network function comprises a deterministic function that can be provided by a network or a function that can be guaranteed by the network.

7. The method according to claim 4, wherein the quality and performance of the deterministic network service comprise at least one of the following: a deterministic service level agreement and a deterministic service quality capability.

8. The method according to any of claims 2-7, wherein,
acquiring a deterministic capability of a resource in the physical topology comprises: receiving, by a controller, resource information reported by a node, wherein the resource information carries the deterministic capability of the resource;
constructing a deterministic route on the virtual topology with the deterministic capability comprises: constructing, by the controller, a deterministic route on the virtual topology with the deterministic capability, and configuring the deterministic route to the node.

9. The method according to any one of claims 2-7, wherein,
acquiring a deterministic capability of a resource in the physical topology comprises: receiving, by a node, resource information flooded by other nodes, wherein the resource information carries the deterministic capability of the resource;
constructing a deterministic route on the virtual topology with the deterministic capability comprises: building, by the node, a deterministic route on the virtual topology with the deterministic capability.

10. An apparatus for constructing a deterministic route, comprising:
a determination module, configured to determine a virtual topology with a deterministic capability, wherein the virtual topology is formed based on a resource set, and the resource set comprises one or more resources with the same deterministic capability in a physical topology of a network;
a routing constructing module, configured to construct a deterministic route on the virtual topology with the deterministic capability.

11. The device according to claim 10, wherein the determination module is configured to:
acquire a deterministic capability of a resource in the physical topology;
classify the resources in the physical topology according to the deterministic capabilities of the resources;
divide resources with the same classification into the same resource set, and constitute the virtual topology based on the resource set.

12. The device according to claim 11, wherein the determination module is further configured to:
grade resources with the same classification according to the value of the deterministic capability thereof;
divide the resources with the same classification and with the same level to the same resource set.

13. A computer readable storage medium, wherein a computer program is stored in the computer readable storage medium , and the computer program is configured to cause, when executed by a processor, the processor to perform steps of the method as claimed in any one of claims 1 to 9.

14. An electronic device, comprising a memory, a processor, and a computer program that is stored in the memory and executable on the processor, wherein the processor is configured to execute the computer program to perform steps of the method as claimed in any one of claims 1 to 9.
